(19) Europäisches Patentamt
European Patent Office
Office européen des brevets

(11) **EP 2 000 998 B1**

(12) **EUROPEAN PATENT SPECIFICATION**

(45) Date of publication and mention
of the grant of the patent:
**02.01.2013 Bulletin 2013/01**

(51) Int Cl.:
***G08B 17/12*** *(2006.01)*

(21) Application number: **08153388.7**

(22) Date of filing: **27.03.2008**

(54) **Flame detecting method and device**

Flammenerkennungsverfahren und -vorrichtung

Procédé et dispositif de détection de flamme

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **31.05.2007 CN 200710108527
11.12.2007 TW 96147304**

(43) Date of publication of application:
**10.12.2008 Bulletin 2008/50**

(73) Proprietor: **Industrial Technology Research
Institute
Chutung
Hsin chu 310 (TW)**

(72) Inventors:
• **Chao, Hao-Ting**
**Dadu Township (TW)**
• **Lu, Chung-Hsien**
**Jhubei City (TW)**
• **Hsu, Yu-Ren**
**Daliao Township (TW)**
• **Chang, Shen-Kuen**
**Chiayi City (TW)**
• **Chen, Yi Chih**
**111, Taipei City (TW)**
• **Huang, Kun-Lin**
**Hsinchu City (TW)**
• **Wang, Cheng-Wei**
**Tainan City (TW)**

(74) Representative: **Isarpatent
Patent- und Rechtsanwälte
Postfach 44 01 51
80750 München (DE)**

(56) References cited:
**AU-A1- 2004 202 851     US-A1- 2006 215 904
US-B1- 6 184 792**

• **PERMUTER H ET AL: "A study of Gaussian
mixture models of color and texture features for
image classification and segmentation"
PATTERN RECOGNITION, ELSEVIER, GB LNKD-
DOI:10.1016/J.PATCOG.2005.10.028, vol. 39, no.
4, 1 April 2006 (2006-04-01), pages 695-706,
XP025226930 ISSN: 0031-3203 [retrieved on
2006-04-01]**

**Description**

The present invention relates to a flame detecting method and device, and more particular to a flame detecting method and device using the image analyzing techniques.

Since the scales of the offices and factories are bigger and bigger, the height thereof is higher and higher, the structures thereof are more and more peculiar and the facilities thereof are more and more complicated, the conventional fire fighting facilities may not work effectively in those situations. If the conventional monitoring system can be improved to capture and analyze images and to determine if there is flame in a building through a particular algorithm, the fire might be detected and controlled efficiently and immediately at its early stage.

The image determining method is to recognize the flame through various steps in an algorithm. The first step is to capture the images through the monitoring system. Then the motilities and the color models of the objects in the images are analyzed by the calculating processors, such as the computers and the digital signal processor (DSP). The conventional recognizing methods such as the background subtraction method, the statistical method, the temporal differencing method and the optical flow method are to separate the pixels whose pixel property difference exceeds a threshold value of the images and compare these pixels to a flame color model. If the conditions of the objects in the images meet the flame features, those objects might be identified as flame. These conventional recognizing methods use the RGB color model as a comparing basis. However, the color recognition accuracy of the RGB color model is not good enough. Therefore, the objects with a similar color to the flame are identified as having the flame properties.

Moreover, the conventional recognizing methods only use the motion detection and the color model recognition, which easily result in misrecognition and cause incorrect identification. For example, if a man dressed in red walks through the monitored area, he will be identified as a moving object with the red element of the flame features and determined as the flame, thereby triggering a false alarm.

U.S. Patent Nos. 6,184,792 and 6,956,485 disclose some algorithms to detect early fire in a monitored area. U.S. Patent No. 6,184,792 discloses a method and an apparatus for detecting early fire in a monitored area, which analyzes a brightness variation for video images by performing a Fast Fourier Transform (FFT) on the temporally varying pixel intensities. U.S. Patent No. 6,956,485 discloses a flame detection algorithm to analyze a frequency variation by a filter-analyzing technology. However, the accuracy of these detecting methods is not mentioned in these patents, and other analyzing techniques, e.g. a chrominance variation analyzing, are not applied in these patents.

In order to overcome the drawbacks in the prior art, a flame detecting method and device are provided, as claimed. Not only does the present invention as claimed solve the problems described above, but also it is easy to be implemented. Thus, the present invention has the utility for the industry.

One aspect of the present invention is to provide a flame detecting method and a device thereof to monitor and determine if a flame exists in order to actuate an alarm and put out the flame in time. Furthermore, the flame detecting method and the device thereof improve the accuracy of flame detection and reduce the possibilities of the false alarm.

In accordance with one aspect, a flame detecting method is provided. The flame detecting method includes: capturing a plurality of images of a monitored area; determining whether a moving area image exists in the plurality of images; analyzing a color model of the moving area image to generate a first analyzed result and comparing the first analyzed result with a first feature of a reference flame image, wherein the color model applies at least one of a three-dimensional RGB Gaussian mixture model and a three-dimensional YUV Gaussian mixture model; and determining whether the moving area image is a flame image based on results of the comparing step.

In accordance with another aspect, a flame detecting method is provided. The flame detecting method includes: capturing a plurality of images of a monitored area; determining whether a moving area image exists in the plurality of images; analyzing a flickering frequency of the moving area image to generate a first analyzed result; and determining whether the moving area image is a flame image based on the first analyzed result.

In accordance with still another aspect, a flame detecting method is provided. The flame detecting method includes: capturing a plurality of images of a monitored area; analyzing a location of a moving area image in the plurality of images to generate a first analyzed result; determining whether the moving area image is a flame image based on the first analyzed result.

In accordance with still another aspect, a flame detecting method is provided. The flame detecting method includes: capturing a plurality of images of a monitored area; analyzing an area of a moving area image in the plurality of images to generate a first analyzed result; and determining whether the moving area image is a flame image based on the first analyzed result.

In accordance with still another aspect, a flame detecting device is provided. The flame detecting device includes: an image capturing unit capturing a plurality of images; a first analyzing unit analyzing a color model of a moving area image in the plurality of images to generate a first analyzed result, wherein the color model applies at least one of a three-dimensional RGB Gaussian mixture model and a three-dimensional YUV Gaussian mixture model; and a comparing unit comparing the first analyzed result to a reference flame feature.

In accordance with still another aspect, a flame detecting device is provided. The flame detecting device includes:

an image capturing unit capturing a plurality of images; a first analyzing unit analyzing a flickering frequency of a moving area image in the plurality of images to generate a first analyzed result; and a comparing unit comparing the first analyzed result to a reference flame feature.

In accordance with still another aspect, a flame detecting device is provided. The flame detecting device includes: an image capturing unit capturing a plurality of images; a location analysis unit analyzing a location variation of the moving area image to generate a first analyzed result; and a comparing unit coupled to the area analysis and comparing the first analyzed result with a first predetermined threshold.

In accordance with still another aspect, a flame detecting device is provided. The flame detecting device includes: an image capturing unit capturing a plurality of images; an area analysis unit coupled to the image capturing unit for analyzing an area variation of the moving area image to generate a first analyzed result; and a comparing unit coupled to the area analysis and comparing the first analyzed result with a first predetermined threshold.

Further scope of applicability of the present invention will become apparent from the detailed description given hereinafter. However, it should be understood that the detailed description and specific examples, while indicating preferred embodiments of the invention, are given by way of illustration only, since various changes and modifications will become apparent to those skilled in the art from this detailed description.

The present invention will become more fully understood from the detailed description given herein below and the accompanying drawings which are given by way of illustration only, and thus are not limitative of the present invention, and wherein:

Fig. 1 illustrates a flow chart of the flame detecting method in an embodiment of the present invention.

Fig. 2A illustrates a structure of the flame detecting device according to a first embodiment of the present invention;

Fig. 2B illustrates a structure of the flame detecting device according to a second embodiment of the present invention; and

Fig. 2C illustrates a structure of the flame detecting device according to a third embodiment of the present invention.

The present invention will now be described in detail with reference to the accompanying drawings, wherein the same reference numerals will be used to identify the same or similar elements throughout the several views. It should be noted that the drawings should be viewed in the direction of orientation of the reference numerals.

To overcome the problems of the false alarm and the delay of putting out the flame due to the incorrect identification of the conventional detecting method, a flame detecting method and a device thereof are provided.

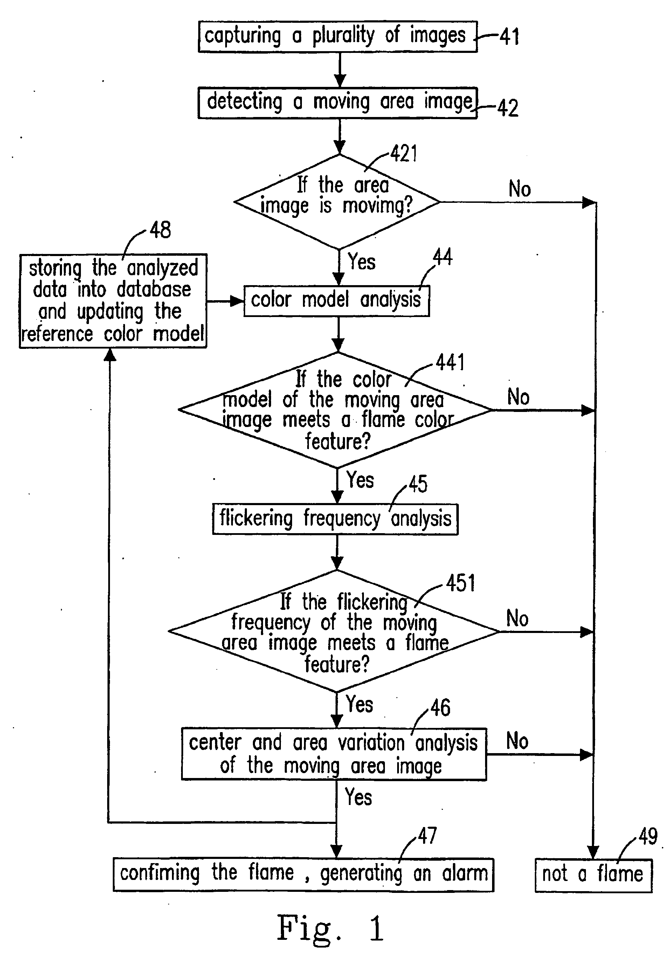

Fig. 1 shows a flow chart of the flame detecting method in an embodiment of the present invention. First, a plurality of images are captured (step 41), wherein the plurality of images are recorded images of a monitored area at different time. For example, a first image is taken in a first capture time and a second image is taken in a second capture time. Then, the motion detection is performed (step 42) to analyze if a moving area image exists in the plurality of images (step 421). The moving area image is a specific image covering an area which has different images in the first image and in the second image. The moving area image is also referred to as a moving object in the monitored area in a time interval between the first capture time and the second capture time.

If a moving area image does not exist, the process goes to step 49 which represents that no flame is detected. If a moving area image exists, the process proceeds to step 44 for a color model analysis. The color model analysis analyzes the color model of the moving area image and determines if it meets a reference flame color feature (step 441). If yes, the process proceeds to step 45 for a flickering frequency analysis; if not, the process goes to step 49. In step 45, the flickering frequency analysis analyzes the flickering frequency of the moving area image, and determines if it meets a flame flickering feature (step 451). If yes, the process proceeds to step 46 for a centroid and area variation analysis, if not, the process goes to step 49. There are two analyses in step 46, one of which is a location analysis of the moving area image and the other one of which is an area analysis of the moving area image. They are respectively performed to check whether a variation of the centroid location of the moving area image or a variation the area/size of the moving area image is lower than the predetermined values. If yes, the process proceeds to the steps 47 and 48; if not, the process goes to step 49. Step 47 is to confirm the flame and generate an alarm signal, and step 48 is to store the above analyzed data into a database for updating.

In the step 44, the color model analysis comprises a three-dimensional Gaussian mixture model (GMM) analysis with three parameters, which cooperate with a time and a space for analyzing a color pixels variation of the moving area image. Furthermore, a three dimensional RGB Gaussian mixture model can be adopted to determine whether the moving area image has a feature of a RGB Gaussian distribution probability in a reference flame color feature. A three dimensional YUV Gaussian mixture model can also be adopted to determine whether the moving area image has a feature of a YUV Gaussian distribution probability in a reference flame color feature. Moreover, the color model analysis further comprises an Artificial Neural Network (ANN) analysis, which is trained by four color parameters R, G, B, and I. A Back-Propagation network (BPN) model can also be used in the Artificial Neural Network analysis, which can be set up with 2 hidden layers and 5 nodes per layer. The analyzed results of the moving area image are then compared to the features of a reference flame in the database.

The above-mentioned YUV model is color model which is different from the commonly used RGB (Red-Green-Blue) model, wherein the color parameter Y stands for "Luminance", the color parameter U stands for "Chrominance" and the color parameter V stands for "Chroma". The relationship between the YUV model and RGB model is:

$$Y = 0.299 * R + 0.587 * G + 0.114 * B$$

$$U = 0.436 * (B - Y)/(1 - 0.114)$$

$$V = 0.615 * (R - Y)/(1 - 0.299)$$

The above-mentioned color parameter I is known as "Intensity" or "gray value", and the relationship between the parameter I and the parameters R, G, and B is I=(R+G+B)/3.

The use of the Gaussian mixture model (GMM) analysis and Artificial Neural Network analysis (ANN) can highly increase the accuracy in the color analysis of a flame.

In step 45, the flickering frequency analysis is performed with a one-dimensional Time Wavelet Transform (TWT) to analyze how at least one of a color and a height of the moving area image vary with time. In an embodiment, the color parameter Y or I is analyzed in the one-dimensional Time Wavelet Transform (TWT), and a range of the flickering frequency for the at least one color parameter from 5Hz to 10Hz is adopted for analyzing. A satisfied result can be obtained by simply performing the Time Wavelet Transform analysis once, which significantly reduces the calculation time.

The analyzed results of the moving area image are then compared to the flickering features of the reference flame features in the database. The use of the Time Wavelet Transform in the flickering frequency analysis has the advantages of keeping the time relationship in the analyzed result. Moreover, the calculation becomes simpler and faster by using a one-dimensional Time Wavelet Transform.

In step 46, the centroid location and the area of the moving area image varying with time are analyzed, because, according to the characteristic of a flame, the location and area thereof should not change with a large scale in a very short time.

In the centroid location variation analysis of step 46, an object tracking algorithm is adopted to analyze and determine the extent that the centroid location of the moving area image varies with time. If the extent the variation of the centroid location of the moving area image exceeds a first predetermined range, the moving area image can be determined as not a flame image.

The first predetermined range can be set as:

$$|(X_{t+1}, Y_{t+1}) - (X_t, Y_t)| < TH1,$$

wherein $(X_t, Y_t)$ is the centroid location of the moving area image in the first capture time, $(X_{t+1}, Y_{t+1})$ is the centroid location of the moving area image in the second capture time, and TH1 is a predetermined value. In an embodiment, TH1 can be set as about 80 pixels when the image size of the images is about 320 x 240 pixels.

In the area variation analysis of step 46, an object tracking algorithm is adopted to analyze and determine another extent the area of the moving area image varies with time. If the extent the variation of the area of the moving area image with time exceeds a second predetermined range, the moving area image can be determined as not a flame image.

In an embodiment, the second predetermined range can be set as:

$$(1/3) A_t < A_{t+1} < 3A_t,$$

wherein $A_t$ is the area of the moving area image in the first capture time, and $A_{t+1}$ is the area of the moving area image in the second capture time.

Through the steps of above-mentioned, the accuracy of the flame detection can be highly improved so that the false alarm would not happen.

In an embodiment, the step 46 is carried out when the analyzed results of the step 44 and the step 45 have been already determined, and the step 47 is carried out when all of the analyzed results obtained from the steps 44-46. However, to increase the efficiency and reduce the complexity of the flame detecting method, the steps 44-46 can be randomly and optionally carried out without a specific sequence.

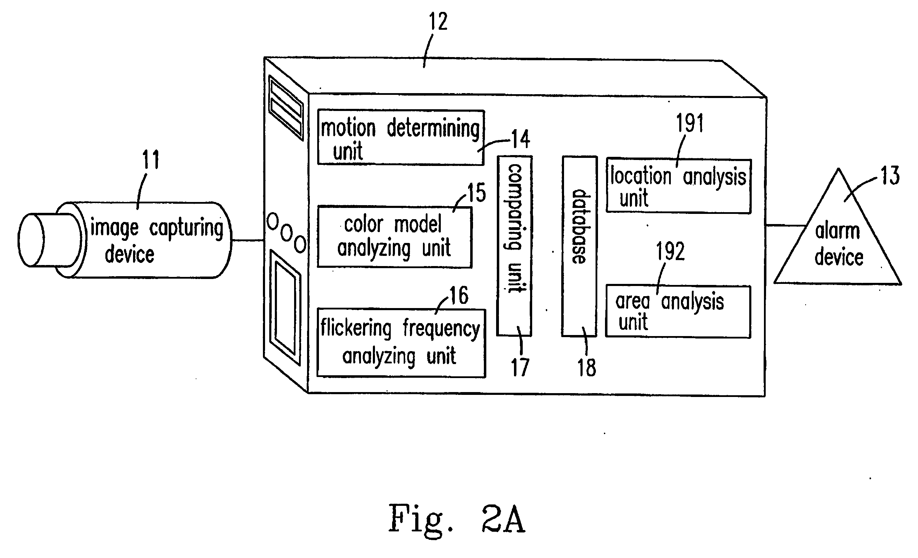

Fig. 2A illustrates the structure of the flame detecting device according to a first embodiment of the present invention. The flame detecting device includes an image capturing device 11, a computer 12 and an alarm device 13. The computer 12 has a motion determining unit 14, a color model analyzing unit 15, a flickering frequency analyzing unit 16, a comparing unit 17, a database 18, a location analysis unit 191 and an area analysis unit 192. The database 18 stores abundant flame features obtained from experiments and previous analyses including the Gaussian color model and the flickering frequency data.

The flame detecting device captures a plurality of images through the image capturing device 11. Whether a moving area image exists in the plurality of images is determined by using the updating background motion determining method of the motion determining unit 14. The colors of the moving area image are analyzed by the color model analyzing unit 15. The flickering frequency relating to the color and height variations of the moving area image with time is analyzed by the flickering frequency analyzing unit 16. The comparing unit 17 is configured to compare the analyzed data with the reference flame features data in the database 18 so as to determine if the moving area image has the same color model and flickering frequency as those of a reference flame. Then, the location analysis unit 191 and the area analysis unit 192 are configured to check if the variations of the centroid location and the area of the moving area image with time are too large so that the moving object represented by the moving area image is impossible to be a flame.

If the color and flickering features of the moving area image match the reference flame features and the variations of the centroid location and the area of the moving area image with time are smaller than the predetermined ranges, the computer 12 determines the moving area image as a flame image and generates an alarm signal through the alarm device 13. The alarm device 13 is configured to send the alarm signal to any of the central controlling computer of the fire monitoring center, the flame signal receiver or a mobile phone.

However, for increasing the efficiency and reduce the complexity of the flame detecting device, any one of the units of the color model analyzing unit 15, the flickering frequency analyzing unit 16, the location analysis unit 191, and the area analysis unit 192 can be randomly and optionally adopted in the computer 12.

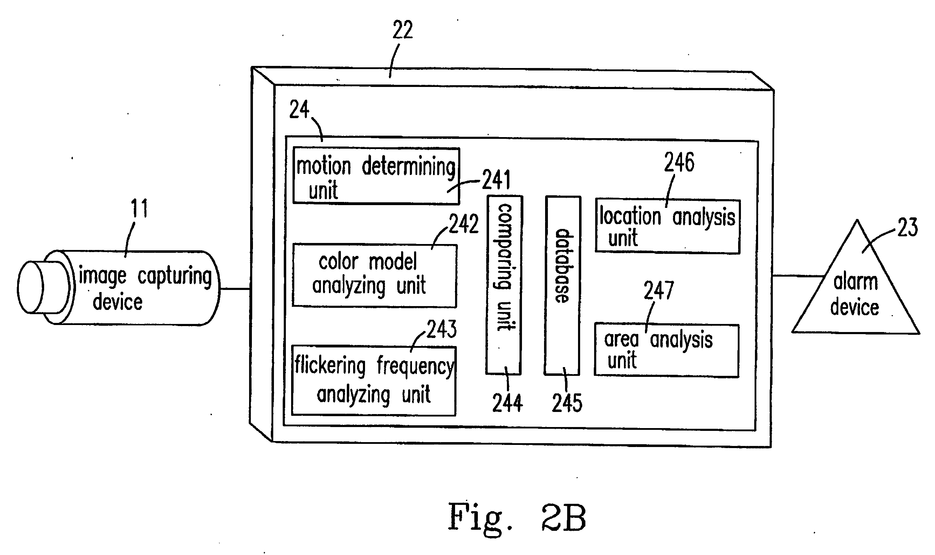

Fig. 2B illustrates the structure of the flame detecting device according to a second embodiment of the present invention. The flame detecting device includes an image capturing device 21, a digital video recorder 22 and an alarm device 23. The digital video recorder 22 comprises a digital signal processor 24, which contains a motion determining unit 241, a color model analyzing unit 242, a flickering frequency analyzing unit 243, a comparing unit 244 and a database 245, a location analysis unit 246 and an area analysis unit 247. The database 245 stores abundant flame features obtained from experiments and previous analyses including the Gaussian color model and the flickering frequency data.

The flame detecting device captures a plurality of images through the image capturing device 21. Whether a moving area image exists in the plurality of images is determined by using the updating background motion determining method of the motion determining unit 241. The color of the moving area image is analyzed by the color model analyzing unit 242. The flickering frequencies relating to the color and the height variations of the moving area image varied with time are analyzed by the flickering frequency analyzing unit 243. Then, the comparing unit 245 is configured to compare the analyzed data to the reference flame features data in the database 246 to determine if the moving area image has the same color model and flickering frequency features as those of the reference flame image. Then, the location analysis unit 246 and the area analysis unit 247 are configured to check if the variations of the centroid location and the area of the moving area image with time are too large so that the moving object represented by the moving area image is impossible to be a flame.

If the color and flickering features of the moving area image match the reference flame features and the variations of the centroid location and the area of the moving area image varying with time are smaller than the predetermined ranges, the flame detecting device 22 determines the moving area image as a flame image and generates an alarm signal through the alarm device 23. The alarm device 23 is configured to send the alarm signal to any of the central controlling computer of the fire monitoring center, a flame signal receiver or a mobile phone.

However, for increasing the efficiency and reduce the complexity of the flame detecting device, any one of the units of the color model analyzing unit 242, the flickering frequency analyzing unit 243, the location analysis unit 246, and the area analysis unit 247 can be randomly and optionally adopted in the digital signal processor 24.

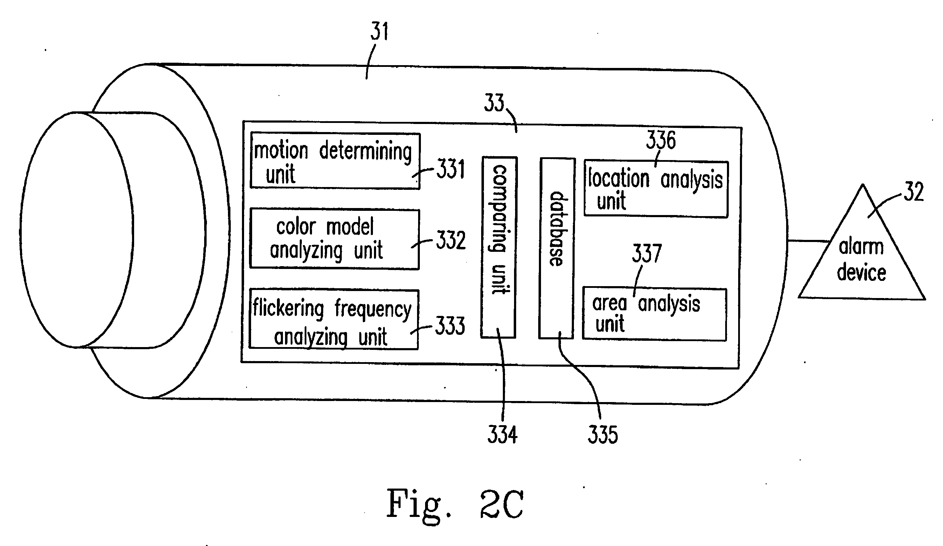

Fig. 2C illustrates the structure of the flame detecting device according to a third embodiment of the present invention. The flame detecting device includes an image capturing device 31 and an alarm device 32. The image capturing device 31 comprises a digital signal processor 33 having a motion determining unit 331, a color model analyzing unit 332, a flickering frequency analyzing unit 333, a comparing unit 334, a database 335, a location analysis unit 336 and an area analysis unit 337. The database 335 stores abundant flame features obtained from experiments and previous analyses including the Gaussian color model and the flickering frequency data.

The flame detecting device captures a plurality of images through the image capturing device 31. Whether a moving area image exists in the plurality of images is determined by using the updating background motion determining method of the motion determining unit 331. The color of the moving area image is analyzed by the color model analyzing unit 332. The flickering frequencies relating to how the variations of the color and the height of the moving area image with time are analyzed by the flickering frequency analyzing unit 333. The comparing unit 334 is configured to compare the analyzed data to the flame features data in the database 335 to determine if the moving area image has the same color model and flickering frequency features as those of the reference flame image. Then, the location analysis unit 336 and the area analysis unit 337 are configured to check if the variations of the centroid location and the area of the moving area image with time are too large so that the moving object represented by the moving area image is impossible to be a flame.

If the color and flickering features of the moving area image match the reference flame features and the variations of the centroid location and the area of the moving area image with time are smaller than the predetermined ranges, the flame detecting device 31 determines the moving area image as a flame image and generates an alarm signal through the alarm device 32. The alarm device 32 is configured to send the alarm signal to any of the central controlling computer of the fire monitoring center, a flame signal receiver and a mobile phone.

However, for increasing the efficiency and reduce the complexity of the flame detecting device, any one of the units of the color model analyzing unit 332, the flickering frequency analyzing unit 333, the location analysis unit 336, and the area analysis unit 337 can be randomly and optionally adopted in the digital signal processor 33.

The database 18, 245 and 335 in the illustrated flame detecting devices store lots of the flame features data which are analyzed from a lot of fire documentary films. In these flame features data in the database, the color model is obtained from analyzing the flame image data by the Gaussian mixture model (GMM) which is a three-dimensional analysis model and used for analyzing the flame color pixels varying degree with time and space. The flickering frequency is obtained from a one-dimensional Time Wavelet Transform (TWT) which analyzes the flame color and the flame height varying degree with time. Subsequently, the analyzed data are processed to be the statistical data and stored in the database for comparison. Besides, the database 18, 245, 335 can learn and update by themselves, so that once the flame detecting device detects a real flame, the database 18, 245, 335 will add the detected data thereinto and update the color model and the flickering frequency data so as to make the subsequent analysis more precise.

The color model analyzing units 15, 242 and 332 are respectively coupled to the motion determining units 14, 241 and 331, and are executed with a Gaussian mixture model and a three-dimensional analysis with three parameters, which are a color pixel variation of the moving area image, a time, and a space. Furthermore, a three-dimensional RGB Gaussian mixture model can be adopted to determine whether the moving area image has a feature of a RGB Gaussian distribution probability in a flame color feature. In addition, a three-dimensional YUV Gaussian mixture model can also be adopted to determine whether the moving area image has a feature of at least one of a RGB Gaussian distribution probability and a YUV Gaussian distribution probability in a flame color feature.

Moreover, the color model analyzing units 15, 242 and 332 can be executed with an Artificial Neural Network (ANN) and/or a Back-Propagation network (BPN) model. The color parameters, R, G, B and I can be adopted for the neural network training, and the Back-Propagation network (BPN) model can be set up with 2 hidden layers and 5 nodes per layer.

The flickering analyzing units 16, 243 and 333 are respectively coupled to the image capturing unit and analyzes how at least one of a color and a height of the moving area image varies with time by using a Time Wavelet Transform, and a range of a flickering frequency for the at least one color parameter from 5Hz to 10Hz is adopted for analyzing. Preferably, a One-dimensional Time Wavelet Transform can be adopted for faster and simpler calculation. A satisfied result can be obtained by simply performing the Time Wavelet Transform analysis once, which significantly reduces the calculation time.

The location analysis units 191, 246 and 336 are respectively coupled to the image capturing units to determine an extent that a centroid location of the moving area image varies with time by using an object tracking algorithm. If the extent that a centroid location of the moving area image varies with time exceeds the first predetermined value, the moving area image is determined as not a flame image, since the centroid location of a flame image should not change with a large scale in a very short time.

In an embodiment, the first predetermined range can be set as:

$$|(X_{t+1}, Y_{t+1}) - (X_t, Y_t)| < TH1,$$

wherein $(X_t, Y_t)$ is the centroid location of the moving area image in a first capture time, $(X_{t+1}, Y_{t+1})$ is the centroid location of the moving area image in a second capture time and TH1 is a predetermined value, for example, TH1 can be set as about 80 pixels while the plurality of images have a size of 320 x 240 pixels.

The area analysis units 192, 247 and 337 are respectively coupled to the image capturing units to determine another extent that an area of the moving area image varies with time by using an object tracking algorithm. If the extent that the area of the moving area image varies with time exceeds a second predetermined value, the moving area image is determined as not a flame image since the area of a flame image should not change with a large scale in a very short time.

In an embodiment, the first predetermined range can be set as:

$$(1/3) A_t < A_{t+1} < 3A_t,$$

wherein $A_t$ is the area of the moving area image in the first capture time, and $A_{t+1}$ is the area of the moving area image in the second capture time.

According to the configuration of the location analysis units and the area analysis units, a flame can be detected more precisely by the devices with fewer false alarms.

## Claims

1. A flame detecting method, comprising the steps of:

   capturing a plurality of images of a monitored area, wherein the plurality of images comprise a first image in a first capture time and a second image in a second capture time, determining whether a moving object area exists in the plurality of images, where a moving area image represents a moving object in the monitored area in a time interval between the first capture time and the second capture time;

   analyzing a variation of the area of the moving area image to generate a first analyzed result and comparing the first analyzed result with a first predetermined threshold, wherein the step of analyzing a variation of the area of the moving area image includes steps of:

      determining a first extent to which the area of the moving area image varies with time by using an object tracking algorithm;

      determining that the moving area image is not a flame image when the first extent exceeds a first predetermined range, which is defined as

$$(1/3) A_t < A_{t+1} < 3A_t,$$

      wherein $A_t$ is the area of the moving area image in the first capture time, and $A_{t+1}$ is the area of the moving area image in the second capture time; and

      determining whether the moving area image is a flame image based on the first analyzed result.

2. The flame detecting method as claimed in claim 1, **characterized in that** the plurality of images are recorded images of the monitored area at different times and the moving area image is a specific image being different in the first image and the second image.

3. The flame detecting method as claimed in claim 2, **characterized by** the steps of

   analyzing a color model of the moving area image in the plurality of images to generate a second analyzed result and comparing the second analyzed result with a first feature of a reference flame image, wherein the color model applies at least one of a three-dimensional RGB Gaussian mixture model and a three-dimensional YUV Gaussian mixture model;

   analyzing a flickering frequency of the moving area image to generate a third analyzed result and comparing the third analyzed result with a second feature of a reference flame image;

   analyzing a location of the moving area image to generate a fourth analyzed result and comparing the fourth analyzed result with a second predetermined threshold;

   determining whether the moving area image is a flame image based on results of the comparing steps;

   storing the second and third analyzed results into a data base; and

   sending out an alarm signal when the moving area image is determined as a flame image.

4. The flame detecting method as claimed in claim 3, **characterized in that** the step of analyzing the flickering frequency determines how at least one of a color and a height of the moving area image varies with time by using a one-dimensional Time Wavelet Transform, wherein at least one of color parameters I and Y is analyzed, and a range of a flickering frequency for the at least one of the color parameters I and Y from 5 Hz to 10 Hz is adopted for analyzing.

5. The flame detecting method as claimed in claim 3, **characterized in that** the step of analyzing the variation of the location of the moving area image includes:

> analyzing and determining a second extent to which a centroid location of the moving area image varies with time by using an object tracking algorithm; and
> determining the moving area image is not a flame image when the second extent exceeds a second predetermined range, which is defined as:

$$|(X_{t+1},Y_{t+1})-(X_t,Y_t)| < TH1,$$

> wherein $(X_t,Y_t)$ is the centroid location of the moving area image in the first capture time, $(X_{t+1},Y_{t+1})$ is the centroid location of the moving area image in the second capture time, and TH1 is a predetermined value.

6. The flame detecting method as claimed in claim 5, **characterized in that** TH1 is 80 pixels when the size of the plurality of images is 320 x 240 pixels.

7. The flame detecting method as claimed in claim 3, **characterized in that** the step of analyzing the color model includes:

> applying a three-dimensional analysis with three parameters, which cooperate with a time and a space for analyzing an area color pixels variation of the moving area image;
> determining whether the moving area image has a feature of an RGB Gaussian distribution probability of a flame color feature and/or whether the moving area image has a feature of a YUV Gaussian distribution probability of a flame color feature;
> applying an artificial neural network analysis, which is trained by four color parameters, R, G, B, and I; and
> applying a Back-Propagation network (BPN) model comprising two hidden layers in the artificial neural network analysis, wherein each hidden layer has 5 nodes.

8. A flame detecting device, comprising:

> an image capturing unit (11) capturing a plurality of images, wherein the plurality of images comprise a first image in a first capture time and a second image in a second capture time,
> a first analyzing unit (14) coupled to the image capturing unit (11) and determining whether a moving area image exists in the plurality of images, where a moving area image represents a moving object in the monitored area in a time interval between the first capture time and the second capture time;
> an area analysis unit (192) coupled to the image capturing unit (11) for analyzing an area variation of the moving area image to generate a first analyzed result, which is compared with a first predetermined threshold, wherein the area analysis unit (192) determines a first extent to which an area of the moving area image varies with time by using an object tracking algorithm, and the moving area image is determined as not a flame image when the first extent exceeds a first predetermined range, which is defined as

$$(1/3) A_t < A_{t+1} < 3A_t,$$

> wherein $A_t$ is the area of the moving area image in the first capture time, and $A_{t+1}$ is the area of the moving area image in the second capture time; and
> a comparing unit (17) comparing the first analyzed result to the first predetermined threshold.

9. The flame detecting device as claimed in claim 8, **characterized in that** the plurality of images are recorded images of the monitored area at different times and the moving area image is a specific image being different in the first image and in the second image.

10. The flame detecting device as claimed in claim 9, further comprising:

a second analyzing unit (15) analyzing a color model of the moving area image in the plurality of images to generate a second analyzed result compared to a reference flame feature, wherein the color model applies at least one of a three-dimensional RGB Gaussian mixture model and a three-dimensional YUV Gaussian mixture model;

a third analyzing unit (16) coupled to the image capturing unit (11) and analyzing a flickering frequency of the moving area image to generate a third analyzed result, which is compared with a flickering frequency feature of a reference flame;

a location analysis unit (191) coupled to the image capturing unit (11) and analyzing a location variation of the moving area image to generate a fourth analyzed result, which is compared with a second predetermined threshold;

a database (18) coupled to the comparing unit (17) and storing the reference flame feature; and

an alarming unit (13) coupled to the comparing unit (17) for generating an alarm signal when the moving area image is determined as a flame image,

wherein the comparing unit (17) is coupled to each of the analyzing units and compares the analyzed results to a feature of a reference flame.

11. The flame detecting device as claimed in claim 10, **characterized in that** the third analyzing unit (16) analyzes how at least one of a color and a height of the moving area image varies with time by using a one-dimensional Time Wavelet Transform, wherein at least one of color parameters I and Y is analyzed, and a range of a flickering frequency for the at least one of the color parameters I and Y from 5 Hz to 10 Hz is adopted for analyzing.

12. The flame detecting device as claimed in claim 10, **characterized in that** the location analysis unit (191) determines a second extent to which a centroid location of the moving area image varies with time by using an object tracking algorithm, and the moving area image is determined as not a flame image when the second extent exceeds a second predetermined range, which is defined as:

$$|(X_{t+1},Y_{t+1})-(X_t,Y_t)| < TH1,$$

wherein $(X_t,Y_t)$ is the centroid location of the moving area image in the first capture time, $(X_{t+1}, Y_{t+1})$ is the centroid location of the moving area image in the second capture time, and TH1 is a predetermined value.

13. The flame detecting method as claimed in claim 12, **characterized in that** TH1 is 80 pixels when a size of the plurality of images is 320 x 240 pixels.

14. The flame detecting device as claimed in claim 10, **characterized in that** the database (18) further stores the second and third analyzed results when the moving area image is determined as a flame for serving as a second reference flame feature.

15. The flame detecting device as claimed in claim 10, **characterized in that** the first analyzing unit (15) is coupled to the image capturing unit (11) and determines whether the moving area image has a feature of at least one of an RGB Gaussian distribution probability and a YUV Gaussian distribution probability of a flame color feature, and applies a Gaussian mixture model and a three-dimensional analysis with three parameters, and the three parameters cooperate with a time and a space for analyzing a color pixels variation of the moving area image.

16. The flame detecting device as claimed in claim 10, **characterized in that**:

the first analyzing unit (15) is configured with an artificial neural network analysis, which is trained by four color parameters, R, G, B, and I; and

a Back-Propagation network (BPN) model comprising two hidden layers is adopted in the artificial neural network analysis, wherein each hidden layer has 5 nodes.

17. The flame detecting device as claimed in claim 8, **characterized in that** the image capturing unit (11) is one of a camera and a video recorder.

**Patentansprüche**

1. Flammendetektionsverfahren, das folgende Schritte umfasst:

   - Aufnehmen einer Vielzahl von Bildern eines überwachten Bereichs, wobei die Vielzahl von Bildern ein erstes Bild in einer ersten Aufnahmezeit und ein zweites Bild in einer zweiten Aufnahmezeit umfasst,
   - Feststellen, ob ein Bereich mit einem sich bewegenden Objekt in der Vielzahl von Bildern existiert, wobei ein Bild mit einem sich bewegenden Bereich ein sich bewegendes Objekt in dem überwachten Bereich in einem Zeitintervall zwischen der ersten Aufnahmezeit und der zweiten Aufnahmezeit darstellt;
   - Analysieren einer Veränderung des Bereichs des Bildes mit dem sich bewegenden Bereich, um ein erstes analysiertes Ergebnis zu generieren, und Vergleichen des ersten analysierten Ergebnisses mit einer ersten zuvor festgelegten Schwelle, wobei der Schritt des Analysierens einer Veränderung des Bereichs des Bildes mit dem sich bewegenden Bereich folgende Schritte umfasst:
   - Feststellen, mit Hilfe eines Objektverfolgungsalgorithmus, eines ersten Ausmaßes, in dem sich der Bereich des Bildes mit dem sich bewegenden Bereich im zeitlichen Verlauf verändert;
   - Feststellen, dass das Bild mit dem sich bewegenden Bereich kein Flammenbild ist, wenn das erste Ausmaß eine erste zuvor festgelegte Spanne übersteigt, die definiert ist als

   $$(1/3)\ A_t\ <\ A_{t+1}\ <\ 3A_t,$$

   wobei $A_t$ der Bereich des Bildes mit dem sich bewegenden Bereich in der ersten Aufnahmezeit ist und $A_{t+1}$ der Bereich des Bildes mit dem sich bewegenden Bereich in der zweiten Aufnahmezeit ist; und
   - Feststellen, anhand des ersten analysierten Ergebnisses, ob das Bild mit dem sich bewegenden Bereich ein Flammenbild ist.

2. Flammendetektionsverfahren nach Anspruch 1, **dadurch gekennzeichnet, dass** die Vielzahl von Bildern aufgezeichnete Bilder des überwachten Bereichs zu verschiedenen Zeiten sind und das Bild mit dem sich bewegenden Bereich ein spezifisches Bild ist, das in dem ersten Bild und dem zweites Bild verschieden ist.

3. Flammendetektionsverfahren nach Anspruch 2, das durch folgende Schritte gekennzeichnet ist:

   - Analysieren eines Farbmodells des Bildes mit dem sich bewegenden Bereich in der Vielzahl von Bildern, um ein zweites analysiertes Ergebnis zu generieren, und Vergleichen des zweiten analysierten Ergebnisses mit einem ersten Merkmal eines Referenzflammenbildes, wobei das Farbmodell ein dreidimensionales Gaußsches RGB-Mischmodell und/oder ein dreidimensionales Gaußsches YUV-Mischmodell anwendet;
   - Analysieren einer Flimmerfrequenz des Bildes mit dem sich bewegenden Bereich, um ein drittes analysiertes Ergebnis zu generieren, und Vergleichen des dritten analysierten Ergebnisses mit einem zweiten Merkmal eines Referenzflammenbildes;
   - Analysieren einer Position des Bildes mit dem sich bewegenden Bereich, um ein viertes analysiertes Ergebnis zu generieren, und Vergleichen des vierten analysierten Ergebnisses mit einer zweiten zuvor festgelegten Schwelle;
   - Feststellen, anhand von Ergebnissen der Vergleichsschritte, ob das Bild mit dem sich bewegenden Bereich ein Flammenbild ist;
   - Speichern des zweiten und des dritten analysierten Ergebnisses in einer Datenbank, und
   - Senden eines Alarmsignals, wenn das Bild mit dem sich bewegenden Bereich als ein Flammenbild identifiziert wird.

4. Flammendetektionsverfahren nach Anspruch 3, **dadurch gekennzeichnet, dass** der Schritt des Analysierens der Flimmerfrequenz unter Verwendung einer eindimensionalen Zeit-Wavelet-Transformation feststellt, wie sich eine Farbe und/oder eine Höhe des Bildes mit dem sich bewegenden Bereich im zeitlichen Verlauf verändern, wobei mindestens einer der Farbparameter I und Y analysiert wird, und eine Spanne einer Flimmerfrequenz für den mindestens einen der Farbparameter I und Y von 5 Hz bis 10 Hz für das Analysieren verwendet wird.

**5.** Flammendetektionsverfahren nach Anspruch 3, **dadurch gekennzeichnet, dass** der Schritt des Analysierens der Veränderung der Position des Bildes mit dem sich bewegenden Bereich Folgendes umfasst:

- Analysieren und Feststellen, mit Hilfe eines Objektverfolgungsalgorithmus, eines zweites Ausmaßes, in dem sich eine zentroide Position des Bildes mit dem sich bewegenden Bereich im zeitlichen Verlauf verändert; und
- Feststellen, dass das Bild mit dem sich bewegenden Bereich kein Flammenbild ist, wenn das zweite Ausmaß eine zweite zuvor festgelegte Spanne übersteigt, die definiert ist als:

$$\left| (X_{t+1}, Y_{t+1}) - (X_t, Y_t) \right| \; < \; \mathtt{TH1},$$

wobei $(X_t, Y_t)$ die zentroide Position des Bildes mit dem sich bewegenden Bereich in der ersten Aufnahmezeit ist, $(X_{t+1}, Y_{t+1})$ die zentroide Position des Bildes mit dem sich bewegenden Bereich in der zweiten Aufnahmezeit ist und TH1 ein zuvor festgelegter Wert ist.

**6.** Flammendetektionsverfahren nach Anspruch 5, **dadurch gekennzeichnet, dass** TH1 80 Pixel beträgt, wenn die Größe der Vielzahl von Bildern 320 x 240 Pixel beträgt.

**7.** Flammendetektionsverfahren nach Anspruch 3, **dadurch gekennzeichnet, dass** der Schritt des Analysierens des Farbmodells Folgendes umfasst:

- Anwenden einer dreidimensionalen Analyse mit drei Parametern, die mit einer Zeit und einem Raum kooperieren, zum Analysieren einer Bereichs-Farbpixelveränderung des Bildes mit dem sich bewegenden Bereich;
- Feststellen, ob das Bild mit dem sich bewegenden Bereich ein Merkmal einer Gaußschen RGB-Verteilungswahrscheinlichkeit eines Flammenfarbmerkmals aufweist und/oder ob das Bild mit dem sich bewegenden Bereich ein Merkmal einer Gaußschen YUV-Verteilungswahrscheinlichkeit eines Flammenfarbmerkmals aufweist;
- Anwenden einer künstlichen neuralen Netzwerk-Analyse, die durch vier Farbparameter, R, G, B, und I, angelernt wird;
- Anwenden eines Back-Propagation Network (BPN)-Modells, das zwei verborgene Schichten in der künstlichen neuralen Netzwerk-Analyse umfasst, wobei jede verborgene Schicht 5 Knoten aufweist.

**8.** Flammendetektionsvorrichtung, die Folgendes umfasst:

- eine Bildaufnahmeeinheit (11), die eine Vielzahl von Bildern aufnimmt, wobei die Vielzahl von Bildern ein erstes Bild in einer ersten Aufnahmezeit und ein zweites Bild in einer zweiten Aufnahmezeit umfasst,
- eine erste Analysiereinheit (14), die mit der Bildaufnahmeeinheit (11) gekoppelt ist und feststellt, ob ein Bild mit einem sich bewegenden Bereich in der Vielzahl von Bildern existiert, wobei ein Bild mit einem sich bewegenden Bereich ein sich bewegendes Objekt in dem überwachten Bereich in einem Zeitintervall zwischen der ersten Aufnahmezeit und der zweiten Aufnahmezeit darstellt;
- eine Bereichsanalyseeinheit (192), die mit der Bildaufnahmeeinheit (11) gekoppelt ist, zum Analysieren einer Bereichsveränderung des Bildes mit dem sich bewegenden Bereich, um ein erstes analysiertes Ergebnis zu generieren, das mit einer ersten zuvor festgelegten Schwelle verglichen wird, wobei die Bereichsanalyseeinheit (192) mit Hilfe eines Objektverfolgungsalgorithmus ein erstes Ausmaß feststellt, in dem sich ein Bereich des Bildes mit dem sich bewegenden Bereich im zeitlichen Verlauf verändert, und das Bild mit dem sich bewegenden Bereich als kein Flammenbild identifiziert wird, wenn das erste Ausmaß eine erste zuvor festgelegte Spanne übersteigt, die definiert ist als

$$(1/3) \; A_t \; < \; A_{t+1} \; < \; 3A_t,$$

wobei $A_t$ der Bereich des Bildes mit dem sich bewegenden Bereich in der ersten Aufnahmezeit ist und $A_{t+1}$ der Bereich des Bildes mit dem sich bewegenden Bereich in der zweiten Aufnahmezeit ist; und
- eine Vergleichseinheit (17), die das erste analysierte Ergebnis mit der ersten zuvor festgelegten Schwelle vergleicht.

**9.** Flammendetektionsvorrichtung nach Anspruch 8, **dadurch gekennzeichnet, dass** die Vielzahl von Bildern aufgezeichnete Bilder des überwachten Bereichs zu verschiedenen Zeiten sind und das Bild mit dem sich bewegenden Bereich ein spezifisches Bild ist, das in dem ersten Bild und in dem zweites Bild verschieden ist.

10. Flammendetektionsvorrichtung nach Anspruch 9, die des Weiteren Folgendes umfasst:

- eine zweite Analysiereinheit (15), die ein Farbmodell des Bildes mit dem sich bewegenden Bereich in der Vielzahl von Bildern analysiert, um ein zweites analysiertes Ergebnis zu generieren, das mit einem Referenzflammenmerkmal verglichen wird, wobei das Farbmodell ein dreidimensionales Gaußsches RGB-Mischmodell und/oder ein dreidimensionales Gaußsches YUV-Mischmodell anwendet;
- eine dritte Analysiereinheit (16), die mit der Bildaufnahmeeinheit (11) gekoppelt ist und eine Flimmerfrequenz des Bildes mit dem sich bewegenden Bereich analysiert, um ein drittes analysiertes Ergebnis zu generieren, das mit einem Flimmerfrequenzmerkmal eines Referenzflamme verglichen wird;
- eine Positionsanalyseeinheit (191), die mit der Bildaufnahmeeinheit (11) gekoppelt ist und eine Positionsveränderung des Bildes mit dem sich bewegenden Bereich analysiert, um ein viertes analysiertes Ergebnis zu generieren, das mit einer zweiten zuvor festgelegten Schwelle verglichen wird;
- eine Datenbank (18), die mit der Vergleichseinheit (17) gekoppelt ist und das Referenzflammenmerkmal speichert; und
- eine Alarmeinheit (13), die mit der Vergleichseinheit (17) gekoppelt ist, zum Generieren eines Alarmsignals, wenn das Bild mit dem sich bewegenden Bereich als ein Flammenbild identifiziert wird, wobei die Vergleichseinheit (17) mit jeder der Analysiereinheiten gekoppelt ist und die analysierten Ergebnisse mit einem Merkmal einer Referenzflamme vergleicht.

11. Flammendetektionsvorrichtung nach Anspruch 10, **dadurch gekennzeichnet, dass** die dritte Analysiereinheit (16) unter Verwendung einer eindimensionalen Zeit-Wavelet-Transformation analysiert, wie sich eine Farbe und/oder eine Höhe des Bildes mit dem sich bewegenden Bereich im zeitlichen Verlauf verändert, wobei mindestens einer der Farbparameter I und Y analysiert wird, und eine Spanne einer Flimmerfrequenz für den mindestens einen der Farbparameter I und Y von 5 Hz bis 10 Hz für das Analysieren verwendet wird.

12. Flammendetektionsvorrichtung nach Anspruch 10, **dadurch gekennzeichnet, dass** die Positionsanalyseeinheit (191) mit Hilfe eines Objektverfolgungsalgorithmus ein zweites Ausmaß feststellt, in dem sich eine zentroide Position des Bildes mit dem sich bewegenden Bereich im zeitlichen Verlauf verändert, und das Bild mit dem sich bewegenden Bereich nicht als ein Flammenbild identifiziert wird, wenn das zweite Ausmaß eine zweite zuvor festgelegte Spanne übersteigt, die definiert ist als:

$$\left| (X_{t+1}, Y_{t+1}) - (X_t, Y_t) \right| \ < \ TH1,$$

wobei $(X_t, Y_t)$ die zentroide Position des Bildes mit dem sich bewegenden Bereich in der ersten Aufnahmezeit ist, $(X_{t+1}, Y_{t+1})$ die zentroide Position des Bildes mit dem sich bewegenden Bereich in der zweiten Aufnahmezeit ist, und TH1 ein zuvor festgelegter Wert ist.

13. Flammendetektionsverfahren nach Anspruch 12, **dadurch gekennzeichnet, dass** TH1 80 Pixel beträgt, wenn eine Größe der Vielzahl von Bildern 320 x 240 Pixel beträgt.

14. Flammendetektionsvorrichtung nach Anspruch 10, **dadurch gekennzeichnet, dass** die Datenbank (18) des Weiteren das zweite und das dritte analysierte Ergebnis speichert, wenn das Bild mit dem sich bewegenden Bereich als eine Flamme identifiziert wird, um als ein zweites Referenzflammenmerkmal zu dienen.

15. Flammendetektionsvorrichtung nach Anspruch 10, **dadurch gekennzeichnet, dass** die erste Analysiereinheit (15) mit der Bildaufnahmeeinheit (11) gekoppelt ist und feststellt, ob das Bild mit dem sich bewegenden Bereich ein Merkmal einer Gaußschen RGB-Verteilungswahrscheinlichkeit und/oder einer Gaußschen YUV-Verteilungswahrscheinlichkeit eines Flammenfarbmerkmals aufweist, und ein Gaußsches Mischmodell und eine dreidimensionale Analyse mit drei Parametern anwendet, und die drei Parameter mit einer Zeit und einem Raum kooperieren, um eine Farbpixelveränderung des Bildes mit dem sich bewegenden Bereich zu analysieren.

16. Flammendetektionsvorrichtung nach Anspruch 10, **dadurch gekennzeichnet, dass**:

die erste Analysiereinheit (15) mit einer künstlichen neuralen Netzwerk-Analyse eingerichtet ist, die durch vier Farbparameter, R, G, B, und I, angelernt wird, und

ein Back-Propagation Network (BPN)-Modell, das zwei verborgene Schichten umfasst, in der künstlichen neuralen Netzwerk-Analyse verwendet wird, wobei jede verborgene Schicht 5 Knoten aufweist.

**17.** Flammendetektionsvorrichtung nach Anspruch 8, **dadurch gekennzeichnet, dass** die Bildaufnahmeeinheit (11) eine Kamera oder ein Videorecorder ist.

**Revendications**

**1.** Procédé de détection de flamme, comprenant les étapes de :

- la capture d'une pluralité d'images d'une zone surveillée, dans lequel la pluralité d'images comprend une première image dans un premier moment de capture et une seconde image dans un second moment de capture,
- la détermination si une zone d'objet en mouvement existe dans la pluralité d'images, une image de zone mobile représentant un objet en mouvement dans la zone surveillée dans un intervalle de temps entre le premier moment de capture et le second moment de capture ;
- l'analyse d'une variation de la zone d'image mobile pour générer un premier résultat analysé et comparaison du premier résultat analysé avec un premier seuil prédéterminé, dans lequel l'étape d'analyse d'une variation de la zone de l'image de zone mobile comprend les étapes de :
- la détermination d'une première étendue dans lequel la zone de l'image de zone mobile varie dans le temps en utilisant un algorithme de poursuite d'objet ;
- la détermination si l'image de zone mobile n'est pas une image de flamme quand la première étendue dépasse une première plage prédéterminée, qui est définie comme

$$(1/3) \ A_t \ < \ A_{t+1} \ < \ 3A_t,$$

où $A_t$ est la zone de l'image de zone mobile dans le premier moment de capture, et $A_{t+1}$ est la zone de l'image de zone mobile dans le premier moment de capture ; et
- la détermination si l'image de zone mobile est une image de flamme basée sur le premier résultat analysé.

**2.** Procédé de détection de flamme selon la revendication 1, **caractérisé par le fait que** la pluralité d'images sont des images enregistrées de la zone surveillée à différents moments et l'image de zone mobile est une image spécifique étant différente dans la première image et dans la seconde image.

**3.** Procédé de détection de flamme selon la revendication 2, caractérisé les étapes de :

- l'analyse d'un modèle de couleur de l'image de zone mobile dans la pluralité d'images pour générer un second résultat analysé et comparaison du second résultat analysé avec une première caractéristique d'une image de flamme de référence, dans lequel le modèle de couleur applique au moins l'un d'un modèle de mélange gaussien RVB en trois dimensions et d'un modèle de mélange gaussien YUV ;
- l'analyse d'une fréquence d'oscillation de l'image de la zone mobile pour générer un troisième résultat analysé et comparaison du troisième résultat analysé avec une seconde caractéristique d'une image de flamme de référence ;
- l'analyse d'un emplacement de l'image de zone mobile pour générer un quatrième résultat analysé et comparaison du quatrième résultat analysé avec un second seuil prédéterminé ;
- la détermination si l'image de zone mobile est une image de flamme basée sur les étapes de comparaison ;
- le stockage des second et troisième résultats analysés dans une banque de données, et
- la transmission d'un signal d'alarme quand l'image de zone mobile est déterminée comme étant une image de flamme.

**4.** Procédé de détection de flamme selon la revendication 3, **caractérisé par le fait que** l'étape d'analyse de la fréquence d'oscillation détermine comment au moins l'une d'une couleur et d'une hauteur de l'image de zone mobile varie dans le temps en utilisant une transformée en ondelette temporelle unidimensionnelle, dans lequel au moins l'un des paramètres de couleurs I et Y est analysé, et une plage d'une fréquence d'oscillation pour l'au moins un des paramètres de couleurs I et Y allant de 5 Hz à 10 Hz est adopté pour l'analyse.

5. Procédé de détection de flamme selon la revendication 3, **caractérisé par le fait que** l'étape d'analyse de la variation de l'emplacement de l'image de zone mobile comprend :

- l'analyse et la détermination d'une seconde étendue dans lequel un emplacement centroïde de l'image de zone mobile varie dans le temps en utilisant un algorithme de poursuite d'objet ; et
- la détermination si l'image de zone mobile n'est pas une image de flamme quand la seconde étendue dépasse une seconde plage prédéterminée, qui est définie comme :

$$\left| (X_{t+1}, Y_{t+1}) - (X_t, Y_t) \right| < TH1,$$

où $(X_t, Y_t)$ est l'emplacement centroïde de l'image de zone mobile dans le premier moment de capture, $(X_{t+1}, Y_{t+1})$ est l'emplacement centroïde de l'image de zone mobile dans le second moment de capture, et TH1 est une valeur prédéterminée.

6. Procédé de détection de flamme selon la revendication 5, **caractérisé par le fait que** TH 1 est 80 pixels quand la taille de la pluralité d'images est 320 x 240 pixels.

7. Procédé de détection de flamme selon la revendication 3, **caractérisé par le fait que** l'étape d'analyse du modèle de couleur comprend :

- l'application d'une analyse en trois dimensions avec trois paramètres, qui coopèrent avec un moment et un espace pour analyser une variation de pixels de couleurs de zone de l'image de zone mobile ;
- la détermination si l'image de zone mobile a une caractéristique d'une probabilité de distribution gaussienne RVB d'une caractéristique de couleur de flamme et/ou si l'image de zone mobile a une caractéristique d'une probabilité de distribution gaussienne YUV d'une caractéristique de couleur de flamme ;
- l'application d'une analyse par réseau de neurones artificiels, qui est entraînée par quatre paramètres de couleurs, R, V, B, et I ;
- l'application d'un modèle de réseau de rétropropagation (BPN) comprenant deux couches cachées dans l'analyse par réseau de neurones artificiels, dans lequel chaque couche cachée a 5 noeuds.

8. Dispositif de détection de flamme, comprenant :

- une unité de capture d'image (11) capturant une pluralité d'images, dans lequel la pluralité d'images comprend une première image dans un premier moment de capture et une seconde image dans un second moment de capture,
- une première unité d'analyse (14) couplée à l'unité de capture d'image (11) et déterminant si une image de zone mobile existe dans la pluralité d'images, où une image de zone mobile représente un objet en mouvement dans la zone surveillée dans un intervalle de temps entre le premier moment de capture et le second moment de capture ;
- une unité d'analyse de zone (192) couplée à l'unité de capture d'image (11) pour analyser une variation de zone de l'image de zone mobile pour générer un premier résultat analysé, qui est comparé à un premier seuil prédéterminé, dans lequel l'unité d'analyse de zone (192) détermine une première étendue dans lequel une zone de l'image de zone mobile varie dans le temps en utilisant un algorithme de poursuite d'objet, et l'image de zone mobile est déterminée comme n'étant pas une image de flamme quand la première étendue dépasse une première plage prédéterminée, qui est définie comme

$$(1/3) \ A, \ < \ A_{t+1} \ < \ 3A_t,$$

où $A_t$ est la zone de l'image de zone mobile dans le premier moment de capture, et $A_{t+1}$ est la zone de l'image de zone mobile dans le second moment de capture ; et
- une unité de comparaison (17) comparant le premier résultat analysé avec le premier seuil prédéterminé.

**9.** Dispositif de détection de flamme selon la revendication 8, **caractérisé par le fait que** la pluralité d'images sont des images enregistrées de la zone surveillée à différents moments et l'image de zone mobile est une image spécifique étant différente dans la première image et dans la seconde image.

**10.** Dispositif de détection de flamme selon la revendication 9, comprenant en outre :

- une seconde unité d'analyse (15) analysant un modèle de couleur de l'image de zone mobile dans la pluralité d'images pour générer un second résultat analysé comparé à une caractéristique de flamme de référence, dans lequel le modèle de couleur applique au moins l'un d'un modèle de mélange gaussien RVB en trois dimensions et d'un modèle de mélange gaussien YUV ;
- une troisième unité d'analyse (16) couplée à l'unité de capture d'image (11) et analysant une fréquence d'oscillation de l'image de zone mobile pour générer un troisième résultat analysé, qui est comparé à une caractéristique de fréquence d'oscillation de la flamme de référence ;
- une unité d'analyse de zone (191) couplée à l'unité de capture d'image (11) et analysant une variation d'emplacement de l'image de zone mobile pour générer un quatrième résultat analysé, qui est comparé au second seuil prédéterminé ;
- une banque de données (18) couplée à l'unité de comparaison (17) et stockant la caractéristique de flamme de référence ; et
- une unité d'alarme (13) couplée à l'unité de comparaison (17) pour générer un signal d'alarme quand l'image de zone mobile est déterminée comme étant une image de flamme,

dans lequel l'unité de comparaison (17) est couplée à chacune des unités d'analyse et compare les résultats analysés pour une caractéristique d'une flamme de référence.

**11.** Dispositif de détection de flamme selon la revendication 10, **caractérisé par le fait que** la troisième unité d'analyse (16) analyse comment au moins l'une d'une couleur et d'une hauteur de l'image de zone mobile varie dans le temps en utilisant une transformée en ondelette temporelle unidimensionnelle, dans lequel au moins l'un des paramètres de couleurs I et Y est analysé, et une plage d'une fréquence d'oscillation pour l'au moins un des paramètres de couleurs I et Y allant de 5 Hz à 10 Hz est adoptée pour l'analyse.

**12.** Dispositif de détection de flamme selon la revendication 10, **caractérisé par le fait que** l'unité d'analyse d'emplacement (191) détermine une seconde étendue lequel un emplacement centroïde de l'image de zone mobile varie dans le temps en utilisant un algorithme de poursuite d'objet, et l'image de zone mobile est déterminée comme n'étant pas une flamme quand la seconde étendue dépasse une seconde plage prédéterminée, qui est définie comme :

$$\left| (X_{t+1}, Y_{t+1}) - (X_t, Y_t) \right| \; < \; TH1,$$

où $(X_t, Y_t)$ est l'emplacement centroïde de l'image de zone mobile dans le premier moment de capture, $(X_{t+1}, Y_{t+1})$ est l'emplacement centroïde de l'image de zone mobile dans le second moment de capture, et TH1 est une valeur prédéterminée.

**13.** Procédé de détection de flamme selon la revendication 12, **caractérisé par le fait que** TH1 est 80 pixels quand une taille de la pluralité d'images est 320 x 240 pixels.

**14.** Dispositif de détection de flamme selon la revendication 10, **caractérisé par le fait que** la banque de données (18) stocke en outre les second et troisième résultats analysés quand l'image de zone mobile est déterminée comme étant une flamme pour servir de seconde caractéristique de flamme de référence.

**15.** Dispositif de détection de flamme selon la revendication 10, **caractérisé par le fait que** la première unité d'analyse (15) est couplée à l'unité de capture d'image (11) et détermine si l'image de zone mobile a une caractéristique de l'au moins une probabilité de distribution gaussienne RVB et une probabilité de distribution gaussienne YUV d'une caractéristique de couleur de flamme, et applique un modèle de mélange gaussien et une analyse en trois dimensions avec trois paramètres coopère avec un moment et un espace pour analyser une variation de pixels de couleurs de l'image de zone mobile.

**16.** Dispositif de détection de flamme selon la revendication 10, **caractérisé par le fait que** :

la première unité d'analyse (15) est configurée avec une analyse par réseau de neurones artificiels, qui est entraînée par quatre paramètres de couleurs, R, V, B, et I, et
un modèle de réseau de rétro-propagation (BPN) comprenant deux couches cachées est adopté dans l'analyse par réseau de neurones artificiels, dans lequel chaque couche cachée a 5 noeuds.

**17.** Dispositif de détection de flamme selon la revendication 8, **caractérisé par le fait que** l'unité de capture d'image (11) est l'une d'une caméra et d'un enregistreur vidéo.

capturing a plurality of images —41

↓

detecting a moving area image —42

↓

421

If the area image is moving? ——No——→

↓ Yes

44

color model analysis

48

storing the analyzed data into database and updating the reference color model →

↓

441

If the color model of the moving area image meets a flame color feature? ——No——→

↓ Yes

45

flickering frequency analysis

↓

451

If the flickering frequency of the moving area image meets a flame feature? ——No——→

↓ Yes

46

center and area variation analysis of the moving area image ——No——→

↓ Yes

47

confiming the flame , generating an alarm

49

not a flame

## Fig. 1

Fig. 2A

EP 2 000 998 B1

Fig. 2B

Fig. 2C

**EP 2 000 998 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6184792 B

- US 6956485 B